Europäisches Patentamt

European Patent Office

Office européen des brevets

(19)

(11) Numéro de publication : **0 119 126 B1**

(12) **FASCICULE DE BREVET EUROPÉEN**

(45) Date de publication du fascicule du brevet :
15.06.88

(51) Int. Cl.⁴ : **B 05 D 1/20**, B 05 C 3/09,
H 01 B 19/04, B 05 C 3/02

(21) Numéro de dépôt : 84400384.8

(22) Date de dépôt : 27.02.84

(54) Procédé et dispositif pour la réalisation de couches monomoléculaires alternées.

(30) Priorité : 04.03.83 FR 8303578

(43) Date de publication de la demande :
19.09.84 Bulletin 84/38

(45) Mention de la délivrance du brevet :
15.06.88 Bulletin 88/24

(84) Etats contractants désignés :
DE GB NL

(56) Documents cités :
BE-A- 430 388
FR-A- 2 341 199
GB-A- 1 582 860
US-A- 2 078 214
US-A- 2 087 504
US-A- 2 833 023
US-A- 2 945 471

(73) Tituláire : **COMMISSARIAT A L'ENERGIE ATOMIQUE**
**31/33, rue de la Fédération**
**F-75015 Paris (FR)**

(72) Inventeur : **Barraud, André**
**4, rue des Ciozeaux**
**F-91440 Bures Sur Yvette (FR)**
Inventeur : **Leloup, Jean**
**4, rue du Clos**
**F-91190 Gif Sur Yvette (FR)**

(74) Mandataire : **Mongrédien, André et al**
**c/o BREVATOME 25, rue de Ponthieu**
**F-75008 Paris (FR)**

EP 0 119 126 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention se rapporte aux procédés de fabrication et de dépôt sur un substrat de couches monomoléculaires et a plus spécialement pour objet un procédé et un dispositif permettant la réalisation de couches monomoléculaires alternées, c'est-à-dire des séquences de couches de deux matériaux différents.

Les couches monomoléculaires, notamment de composés organiques, trouvent de nombreuses applications, particulièrement dans le domaine de l'électronique où elles permettent de réaliser des structures métal-isolant-métal dans lesquelles la couche d'isolant a une épaisseur parfaitement contrôlée et définie.

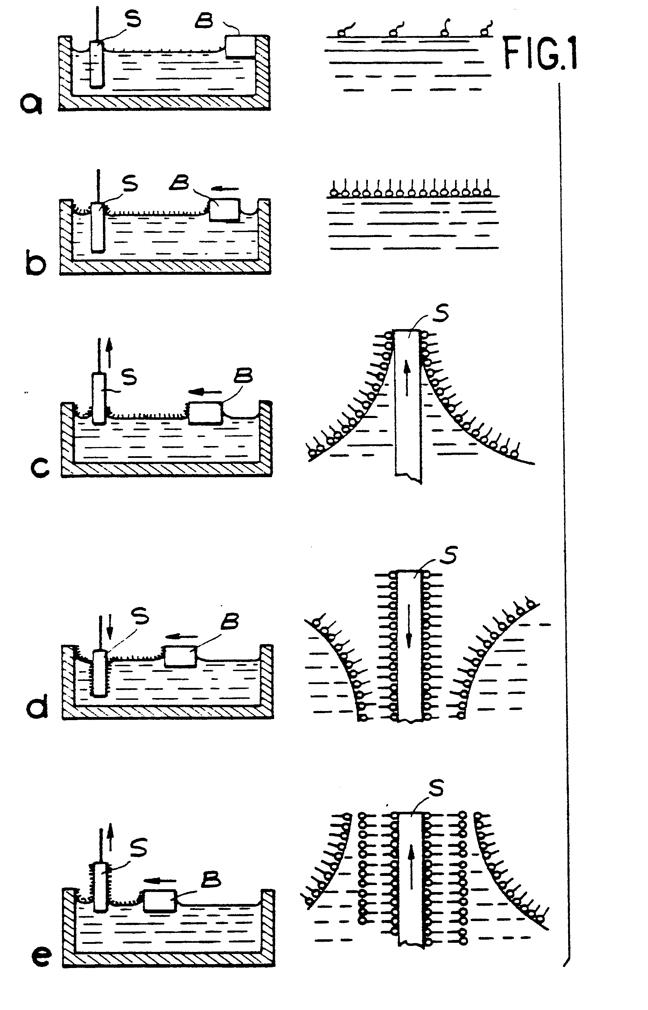

La méthode la plus connue pour réaliser des couches monomoléculaires est la méthode dite « de Langmuir-Blodgett » qui consiste à répandre à la surface d'un liquide, généralement de l'eau, une solution de la molécule à déposer. Les figures 1a à 1e illustrent cette méthode. La solution s'étale à la surface (figure 1a), puis on laisse évaporer le solvant pour former la couche monomoléculaire que l'on comprime ensuite à une pression superficielle déterminée par déplacement d'une barrière flottante B (figure 1b). On réalise le dépôt en plongeant et remontant le substrat S dans l'eau de la cuve à travers cette couche monomoléculaire (figures 1c, 1d et 1e). Généralement, les molécules de la couche à déposer sont des molécules amphiphiles, c'est-à-dire qu'elles possèdent à la fois une partie hydrophile et une partie hydrophobe : après évaporation du solvant, les molécules s'orientent de telle sorte que la partie hydrophile se trouve contre la surface de l'eau tandis que la partie hydrophobe a tendance à s'éloigner de ladite surface (figure 1b). Le plus souvent, la partie hydrophobe est constituée par une chaîne aliphatique inerte et la partie hydrophile contient la partie active de la molécule.

La pratique habituelle pour comprimer la couche monomoléculaire consiste à déplacer une barrière flottante à la surface du liquide au fur et à mesure que le dépôt est effectué sur le substrat afin de maintenir la pression superficielle à la valeur désirée. En fin d'opération, on ramène la barrière mobile à sa position de départ afin de pouvoir recommencer l'opération en introduisant une nouvelle quantité de solvant à la surface de l'eau. Si cette méthode permet de réaliser facilement des couches monomoléculaires, on voit qu'elle ne peut pas être utilisée pour assurer la fabrication et le dépôt en continu de couches monomoléculaires sur des solides de grande longueur tels que des bandes plastiques ou métalliques : en effet, il est nécessaire d'interrompre l'opération périodiquement afin de réapprovisionner le bain avec la solution du matériau à déposer.

Le brevet français n° 2 341 199, appartenant au demandeur, et qui concerne un procédé et un dispositif du type énoncé dans le préambule des revendications 1 et 2 décrit un perfectionnement à la méthode ci-dessus grâce à des rouleaux tournants partiellement immergés dans l'eau d'une cuve compartimentée qui permettent de transférer la couche monomoléculaire d'un compartiment à l'autre sous pression : on peut ainsi réaliser le dépôt en continu sur des bandes plastiques ou métalliques. Le film qui peut être obtenu par l'une ou l'autre de ces deux méthodes peut être transféré sur un substrat solide en faisant simplement traverser audit substrat la surface de l'eau. Par des immersions et émersions successives, d'autres couches monomoléculaires identiques à la première peuvent être déposées, la partie hydrophile d'une couche étant en contact avec la partie hydrophile de la couche suivante, de même pour les parties hydrophobes. Le dépôt ainsi obtenu porte le nom de film de Langmuir-Blodgett ou film L. B.

Cependant, cette méthode présente encore un inconvénient : si elle permet de réaliser le dépôt en continu, elle ne permet de fabriquer que des couches de Langmuir-Blodgett identiques entre elles. on peut encore envisager l'utilisation successive de deux cuves indépendantes avec transfert de l'échantillon par voie aérienne mais on ne peut réaliser que des séquences « deux par deux » et non « alternées » puisque les parties hydrophiles en contact appartiennent nécessairement à deux molécules identiques.

La présente invention a justement pour but de remédier à ces inconvénients grâce à un procédé et à un dispositif qui permettent de réaliser des couches monomoléculaires alternées, c'est-à-dire que la partie hydrophile d'une couche monomoléculaire d'un premier matériau est en contact avec la partie hydrophile d'une couche monomoléculaire d'un deuxième matériau différent du premier. L'un des matériau (A) peut être une molécule et l'autre (B) une molécule différente. Les matériaux peuvent aussi être des mélanges, l'un d'eux pouvant contenir certains constituants de l'autre ou, éventuellement, tous.

Selon la principale caractéristique du procédé objet de l'invention, ce procédé, du genre de ceux dans lesquels on fait traverser audit substrat la surface d'un liquide contenu dans une cuve et sur laquelle on a préalablement répandu une couche monomoléculaire d'une substance donnée, ladite cuve étant séparée en au moins deux compartiments, se caractérise en ce qu'on dépose une couche monomoléculaire à la surface du liquide contenu dans chacun desdits compartiments, ces derniers étant agencés de telle sorte qu'il ne puisse y avoir aucun contact entre les couches monomoléculaires situées dans chacun d'eux et en ce qu'on fait passer ledit substrat alternativement d'un compartiment à l'autre, le transfert se faisant soit uniquement à l'intérieur du liquide, soit uniquement au-dessus de celui-ci, soit alternativement à l'intérieur du liquide et au-dessus de la surface, les couches monomoléculaires situées dans chacun des deux compartiments étant des couches monomoléculaires de deux substances différentes constituées d'un matériau unique ou d'un mélange de matériaux. Les couches monomoléculaires étant des films où la face supérieure n'est pas équivalente à la face inférieure (orientation verticale vectorielle, voir figure 1b), le procédé permet par le choix du sens de traversée de la surface du liquide contenu dans la cuve d'orienter au gré de l'utilisateur les molécules de chaque couche successivement.

Le procédé permet donc non seulement de réaliser des séquences de molécules successives en couches monomoléculaires superposées, mais d'orienter vectoriellement les molécules dans chaque couche.

L'invention a également pour objet un dispositif pour la mise en œuvre de ce procédé. Ce dispositif comprend, de manière connue :

- une cuve séparée en deux compartiments par une cloison dont au moins une partie a une forme telle qu'elle permette le passage du substrat d'un compartiment à l'autre à l'intérieur du liquide, et
- des moyens pour transférer le substrat d'un compartiment à l'autre.

Selon l'invention, les moyens de transfert du substrat comprennent :

- deux supports mobiles verticalement et pouvant plonger dans chacun des compartiments respectivement,
- des moyens d'accrochage du substrat à l'extrémité inférieure de chacun des supports,
- une tige placée à l'intérieur du liquide et mobile en rotation autour d'un axe vertical, et
- des moyens d'accrochage du substrat à chaque extrémité de la tige.

L'invention apparaîtra mieux à la lecture de la description qui va suivre, donnée à titre purement illustratif et nullement limitatif, en référence aux dessins annexés, dans lesquels :

- les figures 1a à 1e, déjà décrites, illustrent le principe de la méthode classique de Langmuir-Blodgett,
- la figure 2 est une vue schématique en perspective illustrant le principe général du procédé objet de l'invention,
- la figure 3 est une vue en perspective illustrant les moyens de transfert du substrat,
- les figures 4a et 4b sont des vues schématiques illustrant deux modes de réalisation des moyens d'accrochage montés sur le substrat dans le dispositif de la figure 3, et
- la figure 5 est une vue schématique illustrant diverses séquences de couches monomoléculaires qu'il est possible d'obtenir grâce au procédé de l'invention.

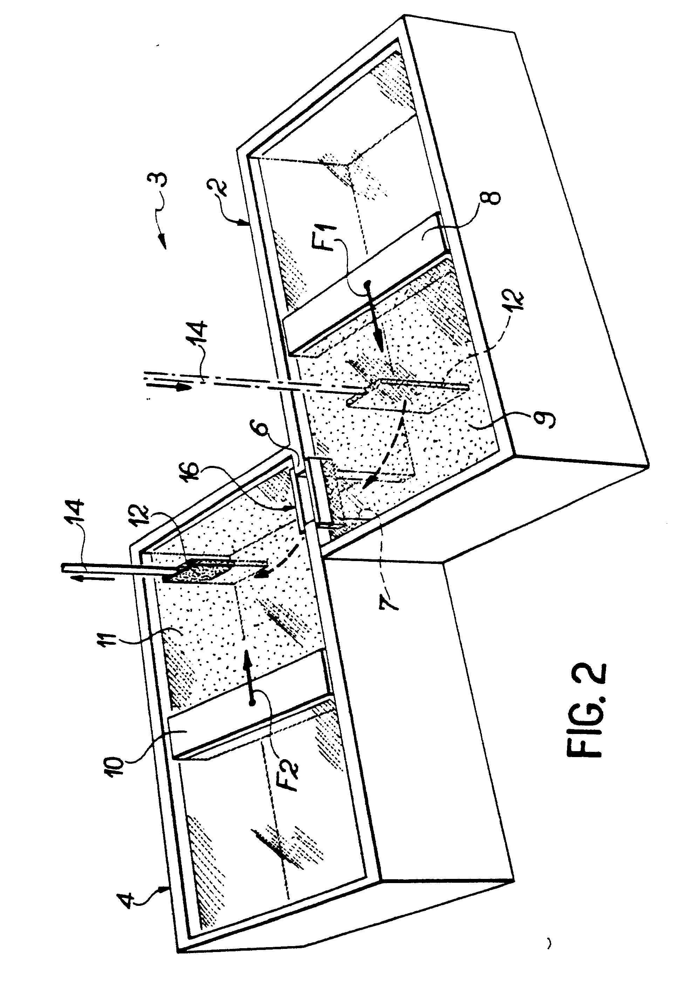

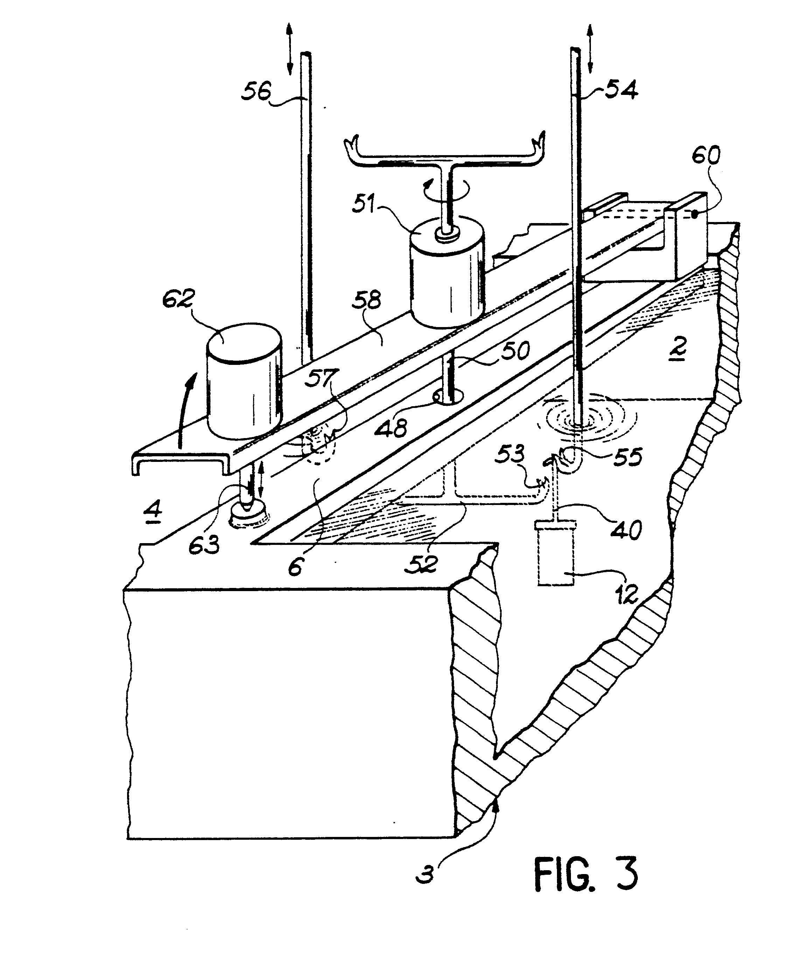

Sur la figure 2, on voit que le dispositif comporte essentiellement deux cuves 2 et 4 qui sont accolées par une partie de paroi commune 6 et peuvent donc être considérées comme deux compartiments d'une cuve unique 3. La paroi 6 comporte une ouverture 7 qui permet la communication entre les deux compartiments, la partie supérieure de l'ouverture 7 étant équipée d'un dispositif 16 qui sera décrit ultérieurement en référence à la figure 3 et qui empêche tout contact entre les couches monomoléculaires situées dans chacun des compartiments 2 et 4 respectivement. Une barrière flottante 8 mobile dans le sens de la flèche F1 à la surface du liquide contenu dans la cuve 2 permet la compression de la couche monomoléculaire 9 contenue dans cette cuve 2 tandis qu'une barrière flottante 10 mobile dans le sens de la flèche F2 à la surface du liquide contenu dans le compartiment 4 permet la compression de la couche monomoléculaire 11 contenue dans ce compartiment.

Selon l'invention, un substrat ou échantillon 12 est introduit dans la partie de la cuve 2 contenant la couche monomoléculaire 9 à l'aide de moyens de levage 14 représentés schématiquement en traits mixtes sur la figure et qui permettent de déplacer l'échantillon 12 aussi bien suivant une direction verticale que suivant une direction horizontale. Une fois que l'échantillon 12 a traversé de haut en bas la couche monomoléculaire 9, il est transféré sous l'eau dans le compartiment 4 à travers l'ouverture 7, le dispositif 16 étant bien entendu agencé de manière à permettre le passage des moyens de levage 14 sans qu'il y ait contact entre les couches monomoléculaires 9 et 11. Une fois que l'échantillon 12 se trouve dans la cuve 4, il est remonté par les moyens de levage 14, ce qui permet le dépôt de la couche monomoléculaire 9 sur la couche 11. Des moyens de levage 14 et un dispositif 16 permettant le passage des moyens de levage sans qu'il y ait contact entre les couches moléculaires 9 et 11 font l'objet d'une demande divisionnaire 86 201 506.2 publiée sous le numéro 211 468.

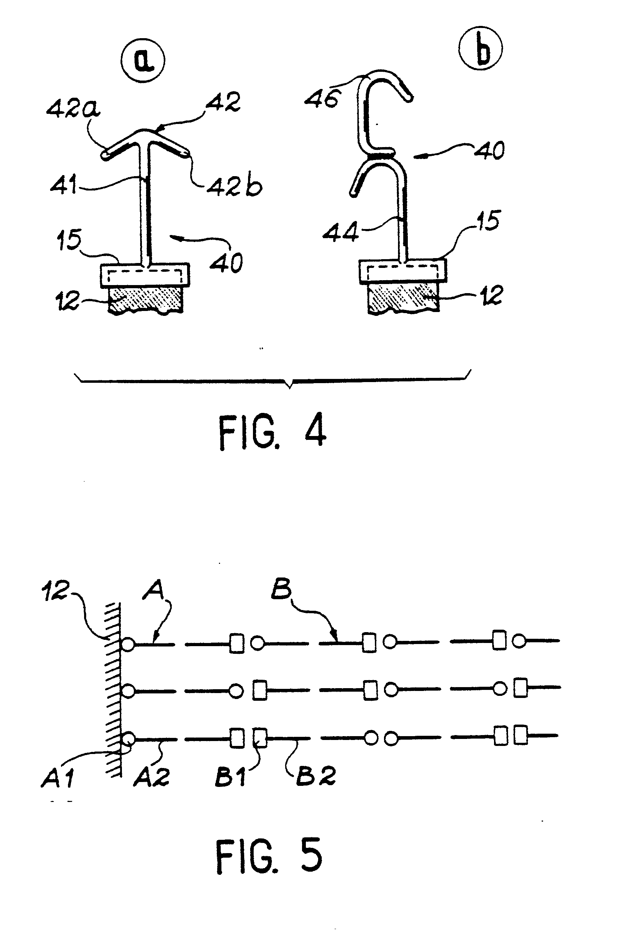

La figure 3 illustre de manière plus détaillée les moyens de transfert du substrat. On retrouve sur cette figure la cuve 3 séparée en deux compartiments 2 et 4 par une cloison 6 située au voisinage de la surface du liquide. Cette cloison a une partie située au-dessus de la surface du liquide et une partie située au-dessous : elle empêche donc tout contact entre les couches monomoléculaires situées dans chacun des compartiments 2 et 4 respectivement. La cloison 6 comporte un orifice 48 permettant le passage d'une tige verticale 50 qui plonge dans le liquide contenu dans la cuve et à la partie inférieure de laquelle est fixée une autre tige horizontale 52. Cette dernière porte à chacune de ses extrémités un crochet, comme par exemple le crochet 53 visible sur la figure du côté du compartiment 2, afin d'accrocher l'échantillon. Deux tiges rigides mobiles verticalement 54 et 56 plongent dans chacun des compartiments 2 et 4 respectivement et sont munies à leur partie inférieure de crochets 55 et 57 qui permettent de faire passer l'échantillon 12 de la tige 54 à la tige 52. L'échantillon 12 est muni de moyens d'accrochage 40 qui seront décrits ci-dessous en référence aux figures 4a et 4b.

Le fonctionnement du dispositif de la figure 3 est le suivant :

On accroche tout d'abord l'échantillon 12 par l'intermédiaire du dispositif 40 au crochet 55 situé à la partie inférieure de la tige 54 et celle-ci est déplacée verticalement de haut en bas afin de réaliser le dépôt de la première couche monomoléculaire dans le compartiment 2. La tige 52 est orientée de sorte que le crochet 53 se trouve dans le compartiment 2.

Ensuite, la tige 54 est amenée suffisamment près de l'extrémité de la tige 52 correspondant au crochet 53 pour que son mouvement descendant permette le passage de l'échantillon 12 d'une tige à l'autre, comme cela sera décrit ci-après. Le moteur 51 est ensuite mis en mouvement de sorte que le crochet 53 de la tige 52 passe du compartiment 2 au compartiment 4 : à ce moment, la tige 56, qui se trouvait initialement en position basse, est remontée afin que le crochet 57 situé à l'extrémité inférieure de celle-ci vienne coopérer avec les moyens d'accrochage 40 de l'échantillon 12 et soulever ce dernier pour effectuer le dépôt de la deuxième couche. On voit que cette disposition permet d'assurer simultanément le transfert de deux échantillons en sens inverse, la durée de l'opération étant de 30 secondes environ. Pendant les périodes de non-utilisation, la tige 52 est ramenée parallèlement à la cloison 6 afin de laisser le maximum de place libre dans chaque compartiment.

On peut également agencer le dispositif de sorte que ce soit l'ensemble constitué par les tiges 50 et 52 qui se soulève pour accrocher l'échantillon lorsque la tige 54 arrive en bas de course. Pour cela, le treuil 51 est monté sur un support longitudinal 58 parallèle à la cloison 6 et ayant à peu près la même longueur que celle-ci. Le support 58 est mobile autour d'un axe 60 situé à l'une de ses extrémités. Le mouvement est commandé par un moteur 62 monté à l'extrémité opposée du support 58, le moteur 62 entraînant une tige 63 par un système du genre vis-écrou. L'extrémité de la tige 63 opposée au moteur 62 prend appui sur la surface supérieure de la cloison 6 : la rotation du moteur 62 entraîne donc la sortie ou la rentrée de la tige 63, ce qui provoque le pivotement du support 58 autour de l'axe 60.

Afin de permettre l'accrochage de l'échantillon par les crochets 53, 55 et 57, un dispositif particulier a été prévu sur l'échantillon 12. Ce dispositif est illustré aux figures 4a et 4b. Sur ces dernières, on voit le substrat 12 maintenu par une pince 15 sur laquelle sont montés des moyens d'accrochage 40. Dans le cas de la figure 4a, ceux-ci se composent essentiellement d'une tige verticale 41 sur laquelle est fixée une pièce 42 se composant de deux parties 42a et 42b : dans ce cas, le crochet 55 situé à l'extrémité de la tige 54 accroche le dispositif 40 par l'intermédiaire de l'une des deux parties de la pièce 42, par exemple la partie 42b, et, au cours du mouvement de descente, l'autre partie 42a de la pièce 42 vient coopérer avec le crochet 53 situé à l'extrémité de la tige 52 : cette disposition assure le passage de l'échantillon d'une tige à l'autre au cours de la descente de la tige 54.

Dans le cas de la figure 4b, les moyens d'accrochage 40 sont constitués par deux crochets superposés, c'est-à-dire un crochet inférieur 44 soudé à un crochet supérieur 46. Dans ce cas, c'est l'un des deux crochets, par exemple le crochet 44 qui est maintenu par le crochet 55 de la tige 54 et, au cours de la descente, c'est le crochet 46 qui vient coopérer avec le crochet 53 de la tige 52.

On voit donc qu'au cours du premier passage dans la cuve 2, c'est la partie hydrophobe de la couche qui s'est déposée en contact avec la surface du substrat tandis qu'au cours du passage dans la cuve 4, c'est la partie hydrophile de la couche monomoléculaire contenue dans cette cuve qui s'est déposée sur le substrat, donc en contact avec la partie hydrophile de la première couche.

Ainsi, le dispositif objet de l'invention permet une vitesse de transfert rapide avec des temps morts très faibles et nettement inférieurs à ceux qui sont nécessaires avec la méthode de Langmuir-Blodgett. D'autre part, comme il n'y a pas de pièces plongeantes animées de mouvements transversaux, il n'y a pas de perturbations à la surface du liquide.

La figure 5 montre diverses séquences qu'il est possible d'obtenir avec le procédé objet de l'invention et qui étaient impossibles à obtenir avec les méthodes de l'art antérieur. Les matériaux à déposer sont désignés par A et B. On voit sur la figure que les molécules du premier matériau A se composent d'une partie hydrophile A1 représentée schématiquement sous forme d'un cercle et d'une partie hydrophobe A2 représentée sous forme d'un trait plein. De même, les molécules du deuxième matériau B se composent d'une partie hydrophile B1 représentée schématiquement par un carré et d'une partie hydrophobe B2 représentée schématiquement par un trait plein. On voit sur la figure, dans le cas de la ligne supérieure, qu'à partir de la surface externe du substrat 12, on a déposé d'abord une molécule A dont la partie hydrophile se trouve sur la surface du substrat 12, puis une molécule B orientée en sens inverse, puis à nouveau une molécule A orientée dans le même sens que la première molécule A, à nouveau une molécule B et ainsi de suite. La partie hydrophile d'une molécule A est toujours en contact avec la partie hydrophile d'une molécule B et il en est de même pour les parties hydrophobes : il n'est en effet pas possible de réaliser des couches monomoléculaires où une partie hydrophile d'une molécule est en contact avec la partie hydrophobe de la molécule constituant la couche voisine. Cette séquence a été réalisée par passage de l'échantillon alternativement au-dessus et au-dessous de la surface du liquide contenu dans la cuve.

Sur la ligne intermédiaire, la séquence qui a été réalisée comporte deux molécules A orientées en sens contraire, puis deux molécules B aussi orientées en sens contraire, puis deux molécules A toujours orientées en sens contraire et ainsi de suite, la partie hydrophile d'une molécule A étant en contact avec la partie hydrophile d'une molécule B tandis que deux parties hydrophobes en contact appartiennent à deux molécules identiques : ce résultat s'obtient par des transferts d'un compartiment à l'autre sous l'eau uniquement.

Enfin, dans l'exemple de la ligne inférieure, on a une séquence dans laquelle les parties hydrophiles en contact appartiennent à deux molécules identiques tandis que les parties hydrophobes en contact appartiennent à deux molécules différentes : ceci est obtenu par transfert aérien seul.

Afin de vérifier le caractère alterné des couches déposées suivant les cycles qui viennent d'être décrits, on a réalisé des essais de spectrométrie infrarouge sur des séquences acide béhénique-porphyrine : si le dépôt est conforme à la ligne supérieure de la figure 5, on observe une bande d'absorption à 1 725 cm$^{-1}$ qui disparait et est remplacée par une bande d'absorption entre 1 700 et 1 705 cm$^{-1}$ si le dépôt est conforme à la ligne inférieure de la figure 4.

Ainsi, le procédé et le dispositif objets de l'invention présentent des avantages particulièrement intéressants puisqu'on peut réaliser des couches monomoléculaires alternées avec différentes combinaisons d'orientation moléculaire de manière simple et rapide, les temps de transfert d'un compartiment à l'autre étant très réduits. De plus, le dispositif pour la mise en œuvre de ce procédé est simple et facile à réaliser, ce qui conduit à un faible coût de l'installation.

Enfin, dans tous les cas, la compression des couches monomoléculaires peut se faire indifféremment soit par la méthode classique de Langmuir-Blodgett, soit par la méthode avec rouleaux tournants illustrée dans le brevet français n° 2 341 199 mentionné au début de la présente description.

## Revendications

1. Procédé de réalisation de couches monomoléculaires alternées sur au moins un substrat (12), dans lequel on fait traverser audit substrat (12) la surface d'un liquide contenu dans une cuve et sur laquelle on a préalablement répandu une couche monomoléculaire d'une substance donnée, ladite cuve étant séparée en au moins deux compartiments (2, 4), caractérisé en ce qu'on dépose une couche monomoléculaire à la surface du liquide contenu dans chacun desdits compartiments (2, 4), ces derniers étant agencés de telle sorte qu'il ne puisse y avoir aucun contact entre les couches monomoléculaires situées dans chacun d'eux et en ce qu'on fait passer ledit substrat (12) alternativement d'un compartiment à l'autre, le transfert se faisant soit uniquement à l'intérieur du liquide, soit uniquement au-dessus de celui-ci, soit alternativement à l'intérieur du liquide et au-dessus de la surface, les couches monomoléculaires situées dans chacun desdits compartiments (2, 4) étant des couches monomoléculaires de deux substances différentes constituées d'un matériau unique ou d'un mélange de matériaux.

2. Dispositif pour la réalisation de couches monomoléculaires alternées sur au moins un substrat (12), comprenant :
- une cuve séparée en deux compartiments (2, 4) par une cloison (6) dont au moins une partie a une forme telle qu'elle permette le passage du substrat (12) d'un compartiment à l'autre à l'intérieur du liquide, et
- des moyens pour transférer le substrat (12) d'un compartiment à l'autre,
caractérisé en ce que les moyens de transfert du substrat (12) comprennent :
- deux supports (54, 56) mobiles verticalement et pouvant plonger dans chacun des compartiments (2, 4) respectivement,
- des moyens d'accrochage du substrat (12) à l'extrémité inférieure de chacun des supports (54, 56),
- une tige (52) placée à l'intérieur du liquide et mobile en rotation autour d'un axe vertical, et
- des moyens d'accrochage du substrat (12) à chaque extrémité de la tige (52).

## Claims

1. Process for producing alternate monomolecular layers on at least one substrate (12), in which the latter is passed through the surface of a liquid contained in a vessel and over which has previously been spread a monomolecular layer of a given substance, said vessel being subdivided into at least two compartments (2, 4), characterized in that a monomolecular layer is deposited on the surface of the liquid contained in each of said compartments (2, 4), the latter being arranged in such a way that there can be no contact between the monomolecular layers located in each of them and in that the substrate (12) is alternately passed from one compartment to the other, transfer solely taking place within the liquid, or solely above the latter, or alternatively within the liquid and above the surface, the monomolecular layers in each of the compartments (2, 4) being monomolecular layers of two different substances constituted by a single material or a mixture of materials.

2. Apparatus for producing alternate monomolecular layers on at least one substrate (12) comprising :
- a vessel subdivided into two compartments (2, 4) by a partition (6), whereof at least one portion is shaped in such a way that it permits the passage of substrate (12) from one compartment to the other within the liquid and
- means for transferring substrate (12) from one compartment to the other,
characterized in that the means for transferring substrate (12) comprise :
- two vertically mobile supports (54, 56), which can be immersed in each of the compartments (2, 4),
- means for fastening the substrate (12) to the lower end of each of the supports (54, 56),
- a rod (52) placed within the liquid and mobile in rotation about a vertical axis and
- means for fastening substrate (12) to each end of the rod (52).

**Patentansprüche**

1. Verfahren zur Herstellung von abwechselnden, monomolekularen Schichten auf wenigstens einem Substrat (12), bei dem man das Substrat (12) mit der Oberfläche einer Flüssigkeit überziehen läßt, die in einem Behälter enthalten ist und auf der man vorhergehend eine monomolekulare Schicht eines gegebenen Stoffes ausgebreitet hat, wobei der genannte Behälter in wenigstens zwei Abteile (2, 4) getrennt ist, dadurch gekennzeichnet, daß man eine monomolekulare Schicht auf die Oberfläche der Flüssigkeit aufbringt, welche in jedem der genannten Abteile (2, 4) enthalten ist, diese Letzteren derart ausgebildet sind, daß keine Berührung zwischen den sich in jedem von ihnen befindenden, molekularen Schichten auftreten kann, und daß man das genannte Substrat (12) wechselweise von einem Abteil zum anderen überführt, wobei die Überführung entweder einzig im Inneren der Flüssigkeit oder oberhalb von ihr oder wechselweise im Inneren der Flüssigkeit und oberhalb der Oberfläche erfolgt, daß die jeweiligen monomolekularen Schichten, die sich in jedem der genannten Abteile (2, 4) befinden, monomolekulare Schichten zweier unterschiedlicher Substanzen sind, die von einem einzigen Stoff oder einer Stoffmischung gebildet sind.

2. Vorrichtung zur Herstellung von abwechselnden, monomolekularen Schichten auf wenigstens einem Substrat (12), mit :

- einem Behälter, der in zwei Abteile (2, 4) durch eine Wand (6) unterteilt ist, von der wenigstens ein Teil eine solche Form aufweist, daß er den Durchgang des Substrats (12) von einem Abteil zum anderen im Inneren der Flüssigkeit ermöglicht, und

- Mitteln, um das Substrat (12) von einem Abteil zu dem anderen zu überführen, dadurch gekennzeichnet, daß die Mittel zum Überführen des Substrats (12) umfassen :

- zwei Halter (54, 56), die vertikal bewegbar sind und in das jeweilige Abteil (2, 4) eintauchen können,

- Mittel zum Haltern des Substrats (12) an dem unteren Ende von jedem der Halter (54, 56),

- eine Stange (52), die im Inneren der Flüssigkeit angeordnet und um eine vertikale Achse drehbewegbar ist, und

- Mittel zum Haltern des Substrats (12) an jedem Ende der Stange (52).

0 119 126

FIG.1

FIG. 2

0 119 126

FIG. 3

FIG. 4

FIG. 5